# EUROPEAN PATENT APPLICATION

(11) **EP 4 400 901 A1**
(43) Date of publication of application: **17.07.2024**
(21) Application number: 22866082.5
(22) Date of filing: 07.04.2022
(51) Int. Cl.: G02F 1/03, G02F 1/035, G02F 1/00

(54) **ELECTRO-OPTIC MODULATOR AND PREPARATION METHOD THEREFOR**

(30) Priority: 10.09.2021 CN 202111063185
(71) Applicant: Picmore Technology (Suzhou) Ltd., Suzhou, Jiangsu 215000 (CN)
(72) Inventor: JI, Mengxi, Suzhou, Jiangsu 215000 (CN); LI, Xianyao, Suzhou, Jiangsu 215000 (CN); SUN, Yuzhou, Suzhou, Jiangsu 215000 (CN)
(74) Representative: Finnegan Europe LLP
(86) International application number: PCT/CN2022/085486
(87) International publication number: WO 2023/035604

(57) **Abstract**

The present application specifically relates to an electro-optic modulator and a preparation method therefor, comprising: providing a substrate, and forming a waveguide and a bottom electrode on an upper surface of the substrate; forming a covering dielectric layer and a metal electrode; forming a supporting substrate on an upper surface of the covering dielectric layer; removing the substrate; providing a lithium niobate thin film, and bonding the lithium niobate thin film to a surface of the covering dielectric layer distant from the supporting substrate; the lithium niobate thin film being located directly below the waveguide. In the preparation method for an electro-optic modulator in the above embodiment, by means of bonding a lithium niobate thin film to an electro-optic chip that has a waveguide, the lithium niobate thin film does not need to be patterned into a lithium niobate waveguide, light can be self-aligned in the waveguide and the lithium niobate thin film, and no coupling is needed.

## Description

### TECHNICAL FIELD

The present application relates to the field of optoelectronic technology, and more particularly, to an electro-optic modulator and a preparation method therefor.

### BACKGROUND ART

At present, a hot topic in research is hybrid integrated electro-optic modulators combining thin-film lithium niobate and silicon optical technology. A common practice is to prepare a lithium niobate waveguide on a wafer that has a silicon waveguide. However, the biggest challenge associated with this type of hybrid integration is how to achieve optical coupling between the lithium niobate waveguide and the silicon optical waveguide. This is because achieving optical coupling between the lithium niobate waveguide and the silicon optical waveguide requires precise alignment between the lithium niobate waveguide and the silicon optical waveguide, and the precise alignment of the two poses stringent requirements on the process.

### SUMMARY OF INVENTION

### TECHNICAL PROBLEM

Therefore, it is necessary to provide an electro-optic modulator capable of solving the above problem of difficult optical coupling between the lithium niobate waveguide and silicon optical waveguide in the electro-optic modulators in the background art.

### SOLUTION TO PROBLEM

### TECHNICAL SOLUTION

One aspect of the present application provides a preparation method for an electro-optic modulator, comprising:
providing a substrate; and forming a waveguide and a bottom electrode on an upper surface of the substrate, the bottom electrode being located on two opposite sides of the waveguide and having a spacing from the waveguide;
providing a covering dielectric layer and a metal electrode, the covering dielectric layer being located on the upper surface of the substrate and covering the waveguide and the bottom electrode; the metal electrode being located in the covering dielectric layer and on the bottom electrode and being connected to the bottom electrode;
forming a supporting substrate on an upper surface of the covering dielectric layer;
removing the substrate; and
providing a lithium niobate thin film and bonding the lithium niobate thin film to a surface of the covering dielectric layer distant from the supporting substrate; the lithium niobate thin film being located directly below the waveguide.

In the preparation method for an electro-optic modulator in the above embodiment, by means of bonding a lithium niobate thin film to an electro-optic chip that has a waveguide, the lithium niobate thin film does not need to be patterned into a lithium niobate waveguide; light can be self-aligned in the waveguide and the lithium niobate thin film, and no coupling is needed. At the same time, since a metal electrode is prepared in the optoelectronic chip, the metal electrode in the optoelectronic chip can be used as an electrode of the electro-optic modulator without the need of an additional metal deposition process to prepare an electrode of the electro-optic modulator again, thus simplifying the process steps and saving costs.

In one embodiment, the step of providing a substrate; and forming a waveguide and a bottom electrode on an upper surface of the substrate comprises:
providing an SOI substrate, the SOI substrate comprising a backing substrate, an buried oxide layer, and a top silicon layer stacked in a bottom-to-top order;
etching the top silicon layer of the SOI substrate to obtain the waveguide and an initial bottom electrode; the remaining buried oxide layer and the backing substrate together serving as the substrate; and
doping the initial bottom electrode to obtain the bottom electrode; the bottom electrode being a heavily doped silicon electrode.

In one embodiment, the step of providing a lithium niobate thin film and bonding the lithium niobate thin film to a surface of the covering dielectric layer distant from the supporting substrate comprises:
providing a bonding substrate, the bonding substrate having a first dielectric layer formed on it;
forming a lithium niobate thin film on an upper surface of the first dielectric layer; and
bonding the lithium niobate thin film to a surface of the covering dielectric layer distant from the supporting substrate via a bonding layer.

In one embodiment, the bonding layer comprises a BCB layer.

In one embodiment, it further comprises the following before the step of providing a lithium niobate thin film and bonding the lithium niobate thin film to a surface of the covering dielectric layer distant from the supporting substrate:
forming a second dielectric layer and a conductive lead-out structure, the second dielectric layer being located on a surface of the covering dielectric layer distant from the supporting substrate, and the conductive lead-out structure being connected to the metal electrode to electrically lead the metal electrode out; the second dielectric layer having in it a first opening, the first opening exposing the waveguide, a portion of the bottom electrode, and a portion of the covering dielectric layer;
the lithium niobate thin film being bonded to a surface of the covering dielectric layer exposed by the first opening distant from the supporting substrate.

In one embodiment, the step of forming a second dielectric layer and a conductive lead-out structure comprises:
forming a second dielectric layer on a surface of the covering dielectric layer distant from the supporting substrate, forming an interconnect hole in the second dielectric layer and the covering dielectric layer, the interconnect hole exposing the metal electrode;
forming a first interconnect plug in the interconnect hole, the first interconnect plug having one end connected to the metal electrode; and
forming a backside electrode on a surface of the second dielectric layer distant from the covering dielectric layer, the backside electrode being connected to the first interconnect plug; the backside electrode and the first interconnect plug together constituting the conductive lead-out structure.

In one embodiment, the step of forming a second dielectric layer and a conductive lead-out structure comprises:
forming a second dielectric layer on a surface of the covering dielectric layer distant from the supporting substrate, forming a first interconnect plug in the second dielectric layer and the covering dielectric layer, and forming a backside electrode in the second dielectric layer; the first interconnect plug having one end connected to the metal electrode and another end connected to the backside electrode; the backside electrode and the first interconnect plug together constituting the conductive lead-out structure; and
forming the first opening and a second opening in the second dielectric layer, the second opening exposing the backside electrode.

In one embodiment, the backside electrode comprises a number of backside electrode metal layers and a number of second interconnect plugs, the backside electrode metal layers that are adjacent are connected by the second interconnect plugs; the second opening exposes the backside electrode metal layer located at the bottom; any of the backside electrode metal layers in the backside electrode is connected to the metal electrode by the first interconnect plug.

The present application further provides an electro-optic modulator, comprising:
a lithium niobate thin film;
a covering dielectric layer located on the lithium niobate thin film;
a waveguide located in the covering dielectric layer and directly above the lithium niobate thin film;
a bottom electrode located in the covering dielectric layer and on two opposite sides of the waveguide and having a spacing from the waveguide; and
a metal electrode located in the covering dielectric layer and on the bottom electrode and connected to the bottom electrode.

In the electro-optic modulator in the above embodiment, a lithium niobate thin film is bonded to an electro-optic chip that has a waveguide, therefore, the lithium niobate thin film does not need to be patterned into a lithium niobate waveguide, light can be self-aligned in the waveguide and the lithium niobate thin film, and no coupling is needed. At the same time, since a metal electrode is prepared in the optoelectronic chip, the stacked metal electrode in the optoelectronic chip can be used as an electrode of the electro-optic modulator without the need of an additional metal deposition process to prepare an electrode of the electro-optic modulator again, thus simplifying the process steps and saving costs.

In one embodiment, it further comprises:
a supporting substrate located on a surface of the covering dielectric layer distant from the lithium niobate thin film;
a first dielectric layer located on a surface of the lithium niobate thin film distant from the covering dielectric layer; and
a bonding substrate located on a surface of the first dielectric layer distant from the lithium niobate thin film.

In one embodiment, it further comprises:
a second dielectric layer located on a surface of the covering dielectric layer distant from the supporting substrate; the second dielectric layer having formed in it a first opening, the first opening exposing the waveguide, a portion of the bottom electrode, and a portion of the covering dielectric layer; the lithium niobate thin film being located in the first opening.

In one embodiment, the lithium niobate thin film and the covering dielectric layer are combined together by way of bonding.

In one embodiment, there are a plurality of the bottom electrodes, a plurality of the metal electrodes, and a plurality of the waveguides, the waveguides being located between the metal electrodes that are adjacent; orthographic projections of all of the waveguides onto a plane in which the lithium niobate thin film is located are on a surface of the lithium niobate thin film.

### ADVANTAGEOUS EFFECTS OF INVENTION

### ADVANTAGEOUS EFFECTS

The electro-optic modulator proposed by the present invention can solve the problem of difficult optical coupling between a lithium niobate waveguide and a silicon optical waveguide.

### BRIEF DESCRIPTION OF DRAWINGS

### DESCRIPTION OF DRAWINGS

In order to more clearly illustrate the technical solutions of the embodiments of the present application, the drawings used in the description of the embodiments are briefly introduced below. Obviously, the drawings described below are only some of the embodiments of the present application; for persons of ordinary skill in the art, drawings of other embodiments can be obtained based on these drawings without creative work.
FIG. 1 is a flow chart of a preparation method for an electro-optic modulator provided in Embodiment 1 of the present application.
FIGs. 2 through 9 are schematic sectional views of structures resulting from various steps in the preparation method for an electro-optic modulator provided in Embodiment 1 of the present application.
FIG. 10 is a schematic sectional view of a structure that resulted after a first interconnect plug and a backside electrode are formed in the preparation method for an electro-optic modulator provided in Embodiment 2 of the present application.
FIG. 11 is a schematic sectional view of a structure that resulted after a lithium niobate thin film is formed in the preparation method for an electro-optic modulator provided in Embodiment 2 of the present application.
FIG. 12 is a schematic sectional view of a structure that resulted after a first interconnect plug and a backside electrode are formed in the preparation method for an electro-optic modulator provided in Embodiment 3 of the present application.
FIG. 13 is a schematic sectional view of a structure that resulted after a lithium niobate thin film is formed in the preparation method for an electro-optic modulator provided in Embodiment 3 of the present application.
FIGs. 14 through 15 are schematic structural diagrams of an electro-optic modulator resulting from the preparation method for an electro-optic modulator provided in Embodiment 4 of the present invention; FIG. 14 is a top-view schematic structural diagram of an electro-optic modulator resulting from the preparation method for an electro-optic modulator provided in Embodiment 4 of the present invention; FIG. 15 is a sectional-view schematic structural diagram along the AA direction in FIG. 14.

DESCRIPTION OF REFERENCE NUMERALS IN THE DRAWINGS: 11. SOI substrate; 110. substrate; 111. backing substrate; 112. buried oxide layer; 113. top silicon layer; 1131. waveguide; 1132. initial bottom electrode; 1133. bottom electrode; 12. covering dielectric layer; 13. stacked metal electrode; 131. metal layer; 132. conductive plug; 14. supporting substrate; 15. lithium niobate thin film; 16. bonding layer; 17. first dielectric layer; 18. bonding substrate; 19. second dielectric layer; 191. first opening; 192. second opening; 20. first interconnect plug; 21. backside electrode; 211. backside electrode metal layer; 212. second interconnect plug.

### EMBODIMENTS OF THE INVENTION

### MODES FOR CARRYING OUT THE INVENTION

In order to facilitate understanding of the application, a more comprehensive description of the application will be provided below with reference to the relevant accompanying drawings. The accompaying drawings show embodiments of the present application. However, the present application can be implemented in many different forms and is not limited by the embodiments described herein. Rather, these embodiments are provided to make the disclosure of the present application more thorough and comprehensive.

Unless otherwise defined, all technical and scientific terms used herein have the same meaning as commonly understood by persons of skill in the art of the present application. The terminology used herein in the specification of the present application is for the purpose of describing specific embodiments only and is not intended to limit the present application.

It can be understood that the terms "first," "second," "third," "fourth," etc. as used in the present application may be used herein to describe various components, but these components are not limited by these terms. These terms are used only to distinguish a first component from another component. By way of example, without departing from the scope of the present application, a first control device may be referred to as a second control device, and similarly, a second control device may be referred to as a first control device. Both the first control device and the second control device are control devices, but they are not the same control device.

It can be understood that "connection" in the following embodiments is understood to mean "electrical connection," "communication connection," etc., if electrical signals or data are transmitted between the connected circuits, modules, units, etc.

When used herein, singular forms indicated by "one," "a/an," and "said/the" may also include plural forms, unless the context clearly indicates otherwise. It should also be understood that the terms "comprise/include" or "have" indicate the presence of a stated feature, ensemble, step, operation, portion, part, or a combination thereof, but do not exclude the possibility of the presence or addition of one or more other features, ensembles, steps, operations, portions, parts, or combinations thereof. And, the term "and/or" as used in the specification includes any and all combinations of the items in the list.

### Embodiment 1

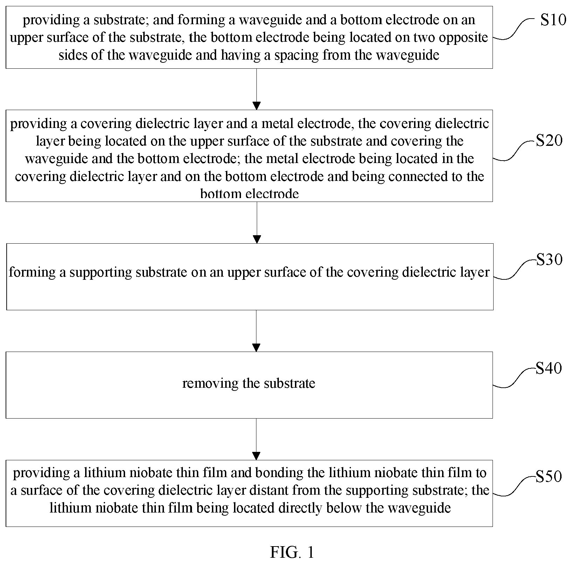

Referring to FIG. 1, the present application provides a preparation method for an electro-optic modulator, the preparation method for an electro-optic modulator comprising:
S10: providing a substrate; and forming a waveguide and a bottom electrode on an upper surface of the substrate, the bottom electrode being located on two opposite sides of the waveguide and having a spacing from the waveguide;
S20: providing a covering dielectric layer and a metal electrode, the covering dielectric layer being located on the upper surface of the substrate and covering the waveguide and the bottom electrode; the metal electrode being located in the covering dielectric layer and on the bottom electrode and being connected to the bottom electrode;
S30: forming a supporting substrate on an upper surface of the covering dielectric layer;
S40: removing the substrate; and
S50: providing a lithium niobate thin film and bonding the lithium niobate thin film to a surface of the covering dielectric layer distant from the supporting substrate; the lithium niobate thin film being located directly below the waveguide.

In the preparation method for an electro-optic modulator in the above embodiment, by means of bonding a lithium niobate thin film to an electro-optic chip that has a waveguide, the lithium niobate thin film does not need to be patterned into a lithium niobate waveguide; light can be self-aligned in the waveguide and the lithium niobate thin film, and no coupling is needed. At the same time, since a metal electrode is prepared in the optoelectronic chip, the stacked metal electrode in the optoelectronic chip can be used as an electrode of the electro-optic modulator without the need of an additional metal deposition process to prepare an electrode of the electro-optic modulator again, thus simplifying the process steps and saving costs.

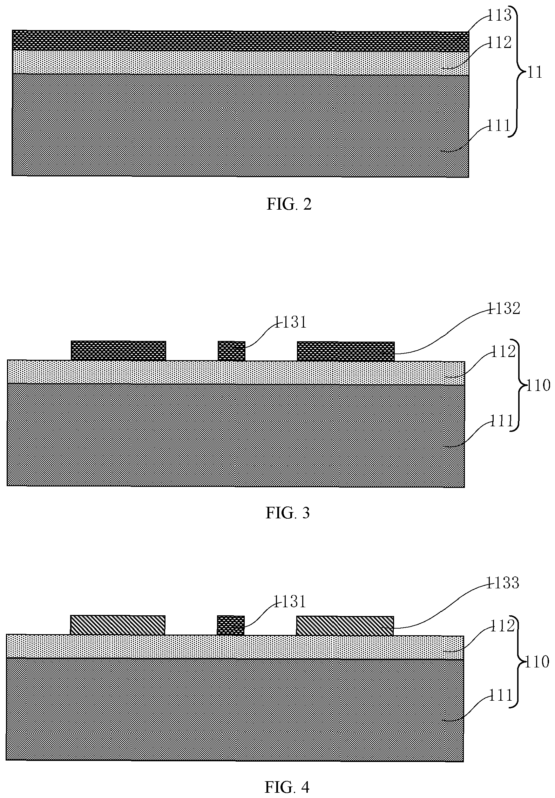

In step S10, referring to step S10 in FIG. 1 and to FIGS. 2 to 4, a substrate 110 is provided and a waveguide 1131 and a bottom electrode 1133 are formed on an upper surface of the substrate 110, and the bottom electrode 1133 is located on two opposite sides of the waveguide 1132 and has a spacing from the waveguide 1132.

As an example, step S10 may comprise the following steps:
S101: providing a silicon-on-insulator (SOI) substrate 110, the SOI substrate 110 comprising a backing substrate 111, an buried oxide layer 112, and a top silicon layer 113 stacked in a bottom-to-top order as shown in FIG. 2;
S102: etching the top silicon layer 113 of the SOI substrate 110 to obtain the waveguide 1131 and an initial bottom electrode 1132, as shown in FIG. 3; specifically, the etching of the top silicon layer 113 may use, but is not limited to, a dry etching process; the remaining buried oxide layer 112 and the backing substrate 111 together serve as the substrate 11;
S103: doping the initial bottom electrode 1132 to obtain the bottom electrode 1133, as shown in FIG. 4; the bottom electrode 1133 may be a heavily doped silicon electrode.

As an example, the spacing between the bottom electrode 1133 and the waveguide 1131 may be configured according to actual needs; in this embodiment, the spacing between the bottom electrode 1133 and the waveguide 1131 may include, but is not limited to, 500 nm to 5000 nm; specifically, the spacing between the bottom electrode 1133 and the waveguide 1131 may be 500 nm, 1000 nm, 2000 nm, 3000 nm, 4000 nm, or 5000 nm, etc.

In the present application, by using a doped silicon electrode as the bottom electrode 1133, the electric field generated by the doped silicon electrode can realize electro-optic modulation. However, the spacing between the bottom electrode 11 and the waveguide 1131 cannot be too far or too close. If the bottom electrode 1133 is too close to the waveguide 1131 (e.g., less than 500 nm), the bottom electrode 1133 will absorb the optical field, resulting in a higher optical loss. However, if the bottom electrode 1133 is too far from the waveguide 1131 (e.g., greater than 5000 nm), the electric field electro-optic modulation generated by the bottom electrode 1133 will be less effective. By limiting the spacing between the bottom electrode 1133 and the waveguide 1131 to 500 nm to 5000 nm, a better electro-optic modulation efficiency may be achieved while ensuring a lower optical loss.

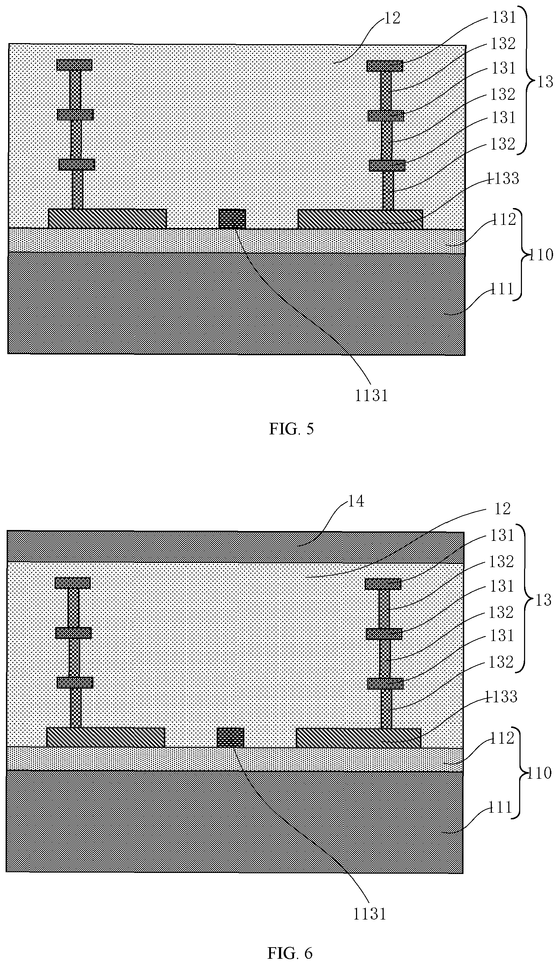

In step S20, referring to step S20 in FIG. 1 and to FIG. 5, a covering dielectric layer 12 and a metal electrode 13 are formed, and the covering dielectric layer 12 is located on an upper surface of the buried oxide layer 112 and covers the waveguide 1131 and the bottom electrode 1133; the metal electrode 13 is located in the covering dielectric layer 12 and on the bottom electrode 1133 and is connected to the bottom electrode 1133.

In one example, the metal electrode 13 may be a monolayer electrode comprising a single metal layer.

In another example, the metal electrode 13 may be a stacked metal electrode and may comprise a number of metal layers 131 and a number of conductive plugs 132, and the bottom metal layer 113 and the bottom electrode 1133, as well as the metal layers 131 that are adjacent, are connected by the conductive plugs 132.

As an example, the conductive plug 132 may be a metal plug; specifically, the conductive plug 132 may comprise, but is not limited to, an aluminum plug, a copper plug, a nickel plug, or a titanium plug, etc.; the metal layer 131 may comprise a copper layer, a nickel layer, an aluminum layer, or a titanium layer, etc.

As an example, an upper surface of the covering dielectric layer 12 may be higher than an upper surface of the metal electrode 13, and the covering dielectric layer 12 may serve to cover and protect the metal electrode 13.

As an example, the covering dielectric layer 12 may comprise, but is not limited to, an oxide layer; specifically, the covering dielectric layer 12 may comprise, but is not limited to, a silicon oxide layer.

As an example, when the metal electrode 13 is a stacked metal electrode, the covering dielectric layer 12 may comprise a plurality of stacked sub dielectric layers (not shown); the method for forming the covering dielectric layer 12 and the metal electrode 13 may be: first, a sub dielectric layer is formed on an upper surface of an buried oxide layer 112, an interconnect via is formed in the sub dielectric layer, and a bottom-most conductive plug 132 is formed in the interconnect via; next, a bottom metal layer 131 is formed on an upper surface of the formed sub dielectric layer; then, another sub dielectric layer is formed on the upper surface of the formed sub dielectric layer, an interconnect via is formed in this sub dielectric layer, and a conductive plug 132 is formed in the interconnect via; after that, another metal layer 131 is formed on an upper surface of the formed sub dielectric layer; and the above steps are repeated a number of times until the covering dielectric layer 12 and the metal electrodes 13 are formed.

In step S30, referring to step S30 in FIG. 1 and to FIG. 6, a supporting substrate 14 is formed on an upper surface of the covering dielectric layer 12.

Specifically, the supporting substrate 14 may be any kind of substrate that can play a supporting role, such as a silicon substrate, a glass substrate, or a sapphire substrate, etc.

As an example, a process that combines the supporting substrate 14 with the upper surface of the covering dielectric layer 12 may be, but is not limited to, a bonding process.

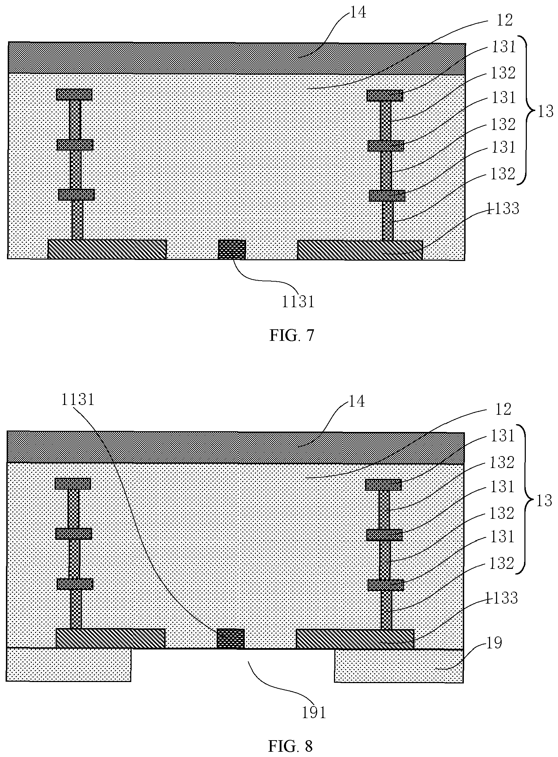

In step S40, referring to step S40 in FIG. 1 and to FIG. 7, the substrate 110 is removed.

Specifically, a process that removes the substrate 110 sequentially may be, but is not limited to, a polishing process. After the removal, a bottom of the covering dielectric layer 12, a bottom of the bottom electrode 1133, and a bottom of the waveguide 1131 are exposed.

In step S50, referring to step S50 in FIG. 1 and to FIG. 8, a lithium niobate thin film 15 is provided, and the lithium niobate thin film 15 is bonded to a surface of the covering dielectric layer 12 distant from the supporting substrate 14; the lithium niobate thin film 15 is located directly below the waveguide 1131.

As an example, providing a lithium niobate thin film 15 and bonding the lithium niobate thin film 15 to a surface of the covering dielectric layer 12 distant from the supporting substrate 14 may comprise:
providing a bonding substrate 18, the bonding substrate 18 having a first dielectric layer 17 formed on it; the bonding substrate 18 may comprise any kind of substrate, such as a silicon substrate, a sapphire substrate, a glass substrate, or a gallium nitride substrate, etc.; the first dielectric layer 17 may comprise, but is not limited to, a silicon oxide layer;
forming a lithium niobate thin film 15 on an upper surface of the first dielectric layer 17; specifically, a process that bonds the lithium niobate thin film 15 to the upper surface of the first dielectric layer 17 may be, but is not limited to, a bonding process; and
bonding the lithium niobate thin film 15 to a surface of the covering dielectric layer 12 distant from the supporting substrate 14 via a bonding layer 16. In other embodiments, the lithium niobate thin film 15 may, alternatively, be directly bonded to the covering dielectric layer 12; in other words, the bonding layer 16 is omitted.

As an example, the bonding layer 16 may comprise, but is not limited to, a BCB (benzocyclobutene) layer. In other examples, the bonding layer 16 may also comprise a silicon oxide layer.

Specifically, the bonding layer 16 may be combined with the covering dielectric layer 12 by adhesive forces or intermolecular forces.

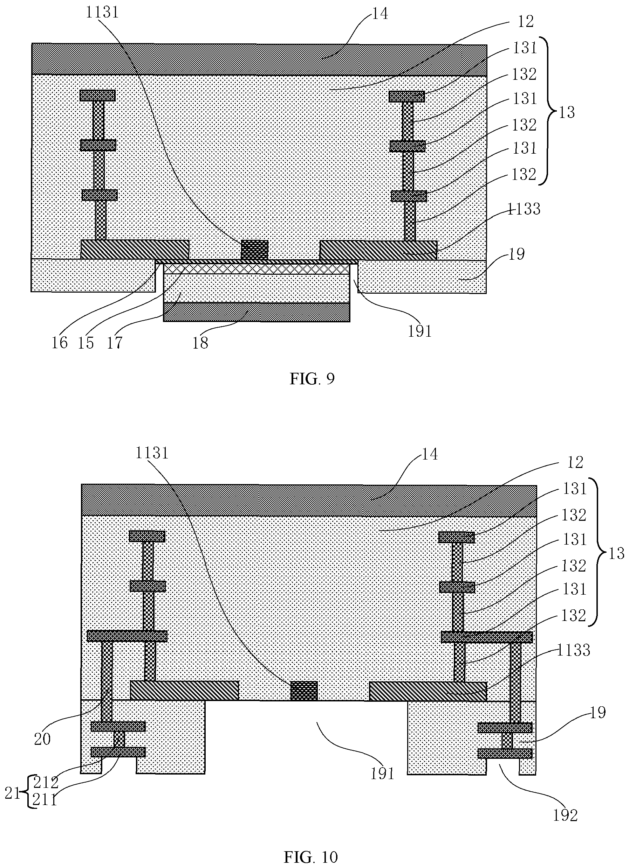

As an example, before providing a lithium niobate thin film 15 and bonding the lithium niobate thin film 15 to a surface of the covering dielectric layer 12 distant from the supporting substrate 14, the following may also be included:
forming a second dielectric layer 19 and a conductive lead-out structure (not shown), the second dielectric layer 19 being located on a surface of the covering dielectric layer 12 distant from the supporting substrate 14, and the conductive lead-out structure being connected to the metal electrode 13 to electrically lead the metal electrode 3 out; the second dielectric layer 19 having in it a first opening 191, the first opening 191 exposing the waveguide 1131, a portion of the bottom electrode 1133, and a portion of the covering dielectric layer 12, as shown in FIG. 8; specifically, a process that forms the first opening 191 may be, but is not limited to, a dry etching process;
the lithium niobate thin film 15 being bonded to a surface of the covering dielectric layer 12 exposed by the first opening 191 distant from the supporting substrate 14, as shown in FIG. 9.

Specifically, the conductive lead-out structure may be a metal plug that runs through the supporting substrate 14 and is connected to the metal electrode 13.

Continuing to refer to FIG. 9 in conjunction with FIGS. 2 through 8, the present application also provides an electro-optic modulator, the electro-optic modulator comprising: a lithium niobate film 15; a covering dielectric layer 12 located on the lithium niobate thin film 15; a waveguide 1131, the waveguide 1131 being located in the covering dielectric layer 12 and directly above the lithium niobate thin film 15; a bottom electrode 1133, the bottom electrode 1133 being located in the covering dielectric layer 12 and on two opposite sides of the waveguide 1131 and having a spacing from the waveguide 1131; and a metal electrode 13, the metal electrode 13 being located in the covering dielectric layer 12 and on the bottom electrode 1133 and being connected to the bottom electrode 113.

In one example, the metal electrode 13 may be a monolayer electrode comprising a single metal layer.

In another example, the metal electrode 13 may be a stacked metal electrode, the metal electrode 13 may comprise a number of metal layers 131 and a number of conductive plugs 132, and the bottom metal layer 131 and the bottom electrode 1133, as well as the metal layers 131 that are adjacent, are connected by the conductive plugs 132.

In the electro-optic modulator in the above embodiment, a lithium niobate thin film 15 is bonded to an electro-optic chip that has a waveguide 1131, therefore, the lithium niobate thin film 15 does not need to be patterned into a lithium niobate waveguide; light can be self-aligned in the waveguide 1131 and the lithium niobate thin film 15, and no coupling is needed. At the same time, since a metal electrode 13 is prepared in the optoelectronic chip, the metal electrode 13 in the optoelectronic chip can be used as an electrode of the electro-optic modulator without the need of an additional metal deposition process to prepare an electrode of the electro-optic modulator again, thus simplifying the process steps and saving costs.

As an example, the spacing between the bottom electrode 1133 and the waveguide 1131 may be configured according to actual needs; in this embodiment, the spacing between the bottom electrode 1133 and the waveguide 1131 may include, but is not limited to, 500 nm to 5000 nm; specifically, the spacing between the bottom electrode 1133 and the waveguide 1131 may be 500 nm, 1000 nm, 2000 nm, 3000 nm, 4000 nm, or 5000 nm, etc.

In the present application, by using a doped silicon electrode as the bottom electrode 1133, the electric field generated by the doped silicon electrode can realize electro-optic modulation. However, the spacing between the bottom electrode 11 and the waveguide 1131 cannot be too far or too close. If the bottom electrode 1133 is too close to the waveguide 1131 (e.g., less than 500 nm), the bottom electrode 1133 will absorb the optical field, resulting in a higher optical loss. However, if the bottom electrode 1133 is too far from the waveguide 1131 (e.g., greater than 5000 nm), the electric field electro-optic modulation generated by the bottom electrode 1133 will be less effective. By limiting the spacing between the bottom electrode 1133 and the waveguide 1131 to 500 nm to 5000 nm, a better electro-optic modulation efficiency may be achieved while ensuring a lower optical loss.

As an example, the conductive plug 132 may be a metal plug; specifically, the conductive plug 132 may comprise, but is not limited to, an aluminum plug, a copper plug, a nickel plug, or a titanium plug, etc.; the metal layer 131 may comprise a copper layer, a nickel layer, an aluminum layer, or a titanium layer, etc.

As an example, an upper surface of the covering dielectric layer 12 may be higher than an upper surface of the metal electrode 13, and the covering dielectric layer 12 may serve to cover and protect the metal electrode 13.

As an example, the covering dielectric layer 12 may comprise, but is not limited to, an oxide layer; specifically, the covering dielectric layer 12 may comprise, but is not limited to, a silicon oxide layer.

As an example, the covering dielectric layer 12 may comprise a plurality of stacked sub dielectric layers (not shown).

As an example, the electro-optic modulator further comprises: a supporting substrate 14; the supporting substrate 14 being located on a surface of the covering dielectric layer 12 distant from the lithium niobate thin film 15; a first dielectric layer 17, the first dielectric layer 17 being located on a surface of the lithium niobate thin film 15 distant from the covering dielectric layer 12; and a bonding substrate 18, the bonding substrate 18 being located on a surface of the first dielectric layer 17 distant from the lithium niobate thin film 15.

Specifically, the supporting substrate 14 may be any kind of substrate that can play a supporting role, such as a silicon substrate, a glass substrate, or a sapphire substrate, etc.

As an example, the bonding substrate 18 may comprise any kind of substrate, such as a silicon substrate, a sapphire substrate, a glass substrate, or a gallium nitride substrate, etc.; the first dielectric layer 17 may comprise, but is not limited to, a silicon oxide layer.

As an example, the lithium niobate thin film 15 is bonded to a surface of the covering dielectric layer 12 via a bonding layer 16; the bonding layer 16 may comprise, but is not limited to, a BCB layer. In other examples, the bonding layer 16 may also comprise a silicon oxide layer.

As an example, the electro-optic modulator further comprises: a second dielectric layer 19, the second dielectric layer 19 being located on a surface of the covering dielectric layer 12 distant from the supporting substrate 14; the second dielectric layer 19 having a first opening 191 formed in it, the first opening 191 exposing the waveguide 1131, a portion of the bottom electrode 1133, and a portion of the covering dielectric layer 12; the lithium niobate thin film 15 being located in the first opening 191.

As an example, the lithium niobate thin film 15 may be bonded to the covering dielectric layer 12 by way of bonding.

As an example, the electro-optic modulator also has a conductive lead-out structure (not shown), and the conductive lead-out structure is connected to the metal electrode 13 to electrically lead the metal electrode 13 out.

Specifically, the conductive lead-out structure may be a metal plug that runs through the supporting substrate 14 and is connected to the metal electrode 13.

### Embodiment 2

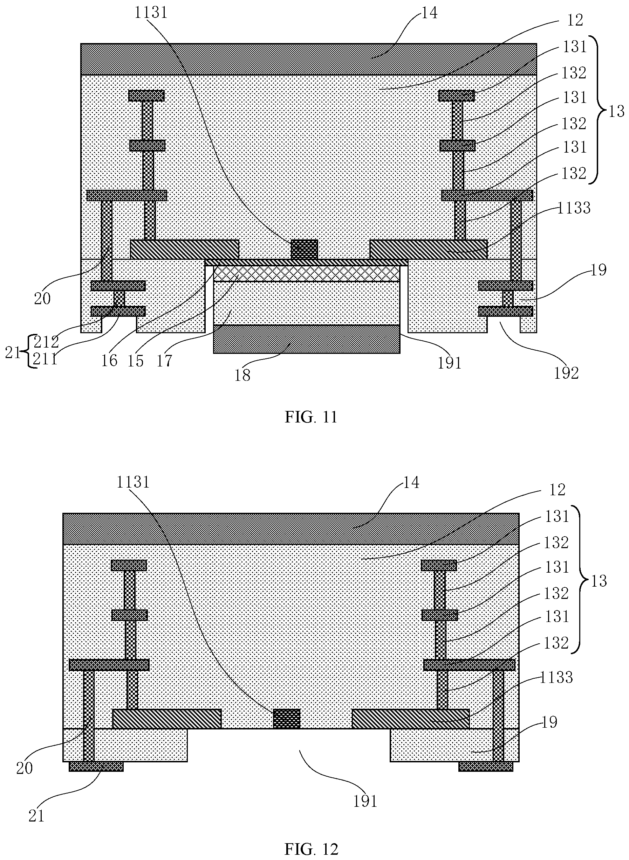

Referring to FIGs. 10 and 11 in conjunction with FIGs. 1 through 9, this embodiment provides another preparation method for an electro-optic modulator; the preparation method for an electro-optic modulator of this embodiment is largely the same as the preparation method for an electro-optic modulator provided in Embodiment 1, wherein the bottom electrode 1133 and the metal electrode 13 together constitute a front electrode; they differ primarily in that: the preparation method to form the second dielectric layer 19 and the conductive lead-out structure is different in the preparation method for an electro-optic modulator of the present application; specifically, steps to form the second dielectric layer 19 and the conductive lead-out structure in the preparation method for an electro-optic modulator of the present application comprises:
forming a second dielectric layer 9 on a surface of the covering dielectric layer 12 distant from the supporting substrate 14;
forming an interconnect hole (not shown) in the second dielectric layer 19 and the covering dielectric layer 12, the interconnect hole exposing any of the metal layers 131 in the stacked metal electrode 113; specifically, the interconnect hole may expose the bottom metal layer 131 in the stacked metal electrode 113, or expose the next-to-bottom metal layer 131 in the metal electrode 13, or expose any of the other metal layers 131 in the metal electrode 13;
forming a first interconnect plug 20 in the interconnect hole, and forming a backside electrode 21 in the second dielectric layer 19; the first interconnect plug 20 having one end connected to the backside electrode 21 and another end connected to the metal electrode 13; when the metal electrode 13 is a stacked metal electrode, the first interconnect plug 20 may be connected to any metal layer 113 in the metal electrode 113, i.e., the first interconnect plug 20 may be connected to the bottom metal layer 131 in the stacked metal electrode 113, or to the next-to-bottom metal layer 131 in the metal electrode 13, or to any of the other metal layers 131 in the metal electrode 13; the backside electrode 21 and the first interconnect plug 20 together constituting the conductive lead-out structure; and
forming the first opening 191 and a second opening 192 in the second dielectric layer 19, the second opening 192 exposing the backside electrode 21, as shown in FIG. 10.

As an example, as shown in FIGs. 10 and 11, the backside electrode 21 may comprise a number of backside electrode metal layers 211 and a number of second interconnect plugs 212, the backside electrode metal layers 211 that are adjacent are connected by the second interconnect plugs 212; the second opening 192 exposes the backside electrode metal layer 211 located at the bottom; any of the backside electrode metal layers 211 in the backside electrode 21 is connected to any of the metal layers 131 in the metal electrode 13 by the first interconnect plug 20.

Continuing to refer to FIG. 11, this embodiment provides another electro-optic modulator; the specific structure of the electro-optic modulator of this embodiment is largely the same as the specific structure of the electro-optic modulator of Embodiment 1; they differ primarily in that: in Embodiment 1, the electrode of the electro-optic modulator only comprises the front electrode constituted by the bottom electrode 1133 and the metal electrode 13 together; however, in this embodiment, the conductive lead-out structure in the electro-optic modulator is different from the conductive lead-out structure of the electro-optic modulator in Embodiment 1; the conductive lead-out structure in this embodiment comprises: a backside electrode 21, the backside electrode 21 being located in the second dielectric layer 19; a first interconnect plug 20, the first interconnect plug 20 having one end connected to the backside electrode 21 and another end connected to the metal electrode 13; the second dielectric layer 19 also having formed in it a second opening 192, the second opening 192 exposing the backside electrode 21.

Specifically, when the metal electrode 13 is a stacked metal electrode, the first interconnect plug 20 may be connected to any metal layer 113 in the metal electrode 113, i.e., the first interconnect plug 20 may be connected to the bottom metal layer 131 in the stacked metal electrode 113, or to the next-to-bottom metal layer 131 in the metal electrode 13, or to any of the other metal layers 131 in the metal electrode 13; the backside electrode 21 and the first interconnect plug 20 together constitute the conductive lead-out structure.

As an example, the backside electrode 21 may comprise a number of backside electrode metal layers 211 and a number of second interconnect plugs 212, the backside electrode metal layers 211 that are adjacent are connected by the second interconnect plugs 212; the second opening 192 exposes the backside electrode metal layer 211 located at the bottom; any of the backside electrode metal layers 211 in the backside electrode 21 is connected to the metal electrode 13 by the first interconnect plug 20.

### Embodiment 3

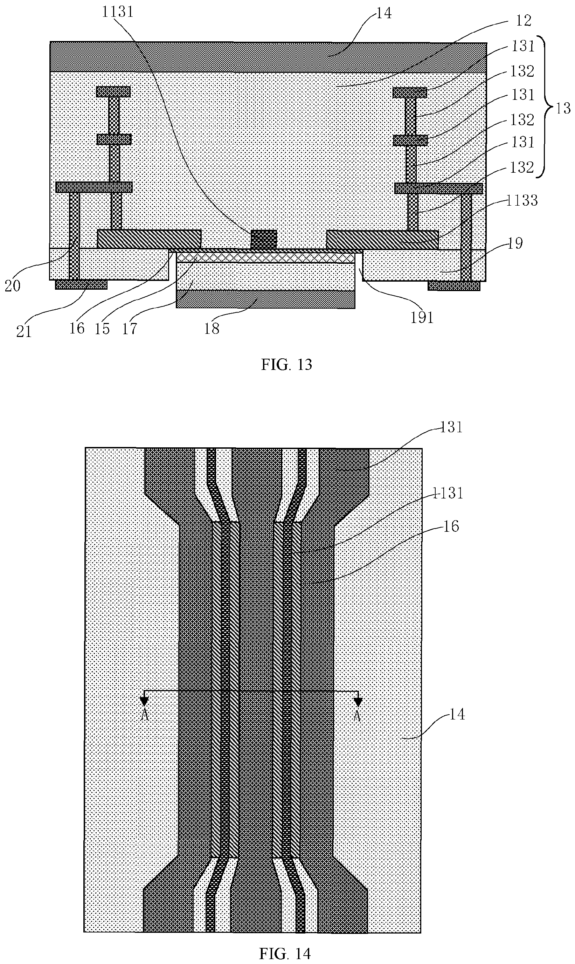

Referring to FIGs. 12 and 13 in conjunction with FIGs. 1 through 9, this embodiment provides another preparation method for an electro-optic modulator; the preparation method for an electro-optic modulator of this embodiment is largely the same as the preparation method for an electro-optic modulator provided in Embodiment 1, wherein the bottom electrode 1133 and the metal electrode 13 together constitute a front electrode; they differ primarily in that: the preparation method for the second dielectric layer 19 and the conductive lead-out structure in the preparation method for the electro-optic modulator of the present application is different from the preparation method for the second dielectric layer 19 and the conductive lead-out structure in the preparation method for the electro-optic modulator in Embodiment 1; in the present embodiment, the preparation method for the second dielectric layer 19 and the conductive lead-out structure comprises:
forming a second dielectric layer 19 on a surface of the covering dielectric layer 12 distant from the supporting substrate 14; forming an interconnect hole (not shown) in the second dielectric layer 19 and the covering dielectric layer 12, the interconnect hole exposing the metal electrode 13;
forming a first interconnect plug 20 in the interconnect hole, the first interconnect plug 20 having one end connected to the metal electrode 13; and
forming a backside electrode 21 on a surface of the second dielectric layer 19 distant from the covering dielectric layer 12, the backside electrode 21 being connected to the first interconnect plug 20, as shown in FIG. 12; the backside electrode 21 and the first interconnect plug 20 together constituting the conductive lead-out structure. The electro-optic modulator obtained from the preparation method for an electro-optic modulator of this embodiment is shown in FIG. 13.

Continuing to refer to FIG. 13, this embodiment provides another electro-optic modulator; the specific structure of the electro-optic modulator of this embodiment is largely the same as the specific structure of the electro-optic modulator of Embodiment 1; they differ primarily in that: the conductive lead-out structure in the electro-optic modulator in Embodiment 1 is different; the conductive lead-out structure in this embodiment comprises: a backside electrode 21, the backside electrode 21 being located on a surface of the second dielectric layer 19 distant from the covering dielectric layer 12; and a first interconnect plug 20, with one end connected to the backside electrode 21 and another end connected to the metal electrode 13.

### Embodiment 4

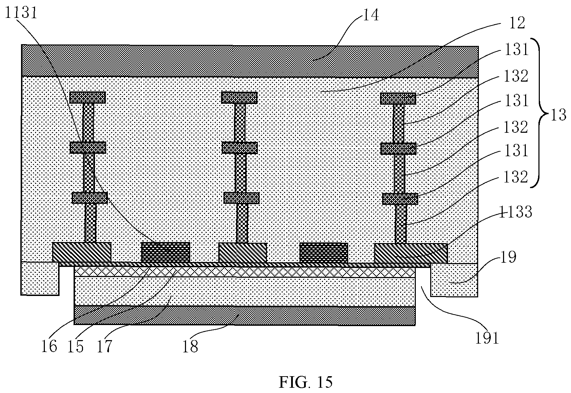

Referring to FIGs. 14 through 15 in conjunction with FIGs. 1 through 9, this embodiment provides another electro-optic modulator; the specific structure of the electro-optic modulator of this embodiment is largely the same as the specific structure of the electro-optic modulator of Embodiment 1; they differ primarily in that: the electro-optic modulator in Embodiment 1 comprises one waveguide 1131, two metal electrodes 13, and two bottom electrodes 1133; however, in the present embodiment, there are a plurality of the bottom electrodes 1133, a plurality of the metal electrodes 13, and a plurality of the waveguides 1131 in the electro-optic modulator, the waveguides 1131 being located between the metal electrodes 13 that are adjacent; orthographic projections of all of the waveguides 1131 onto a plane in which the lithium niobate thin film 15 is located are on a surface of the lithium niobate thin film 15.

As an example, the waveguides 1131 and the metal layers 131 each comprises an end straight-line portion (not shown) at two ends, a middle straight-line portion (not shown) in the middle, and a bending portion (not shown) between the end straight-line portion and the middle straight-line portion; the lithium niobate thin film 15 may be located only below the middle straight-line portions of the waveguides 1131 and the middle straight-line portions of the metal layers 131, as shown in FIG. 14.

In the description of the specification, reference to the terms "one embodiment," "some embodiments," "other embodiments," etc. means that a specific feature, a structure, a material, or a characteristic described in conjunction with the embodiment or example is included in at least one embodiment or example of the present invention. In the specification, an illustrative description of the above terms does not necessarily refer to the same embodiment or example.

The various technical features of the above-described embodiments may be combined in any manner, and all possible combinations of the technical features of the above-described embodiments have not been described for the sake of conciseness of description; however, as long as there is no incompatibility in the combinations of these technical features, they should be considered to be within the scope of the present specification as recorded herein.

The above-described embodiments, which are described in a more specific and detailed manner, are only several embodiments of the present invention, but they are not to be thus construed as to limit the patent scope of the invention. It should be noted that, for persons of ordinary skill in the art, a number of variations and improvements may be made without departing from the conception of the present invention, all of which fall within the scope of protection of the present invention. Therefore, the scope of protection of the patent for the present invention shall be defined by the appended claims.

## Claims

1. A preparation method for an electro-optic modulator, **characterized in that** it comprises:
providing a substrate; and forming a waveguide and a bottom electrode on an upper surface of the substrate, the bottom electrode being located on two opposite sides of the waveguide and having a spacing from the waveguide;
providing a covering dielectric layer and a metal electrode, the covering dielectric layer being located on the upper surface of the substrate and covering the waveguide and the bottom electrode; the metal electrode being located in the covering dielectric layer and on the bottom electrode and being connected to the bottom electrode;
forming a supporting substrate on an upper surface of the covering dielectric layer;
removing the substrate; and
providing a lithium niobate thin film and bonding the lithium niobate thin film to a surface of the covering dielectric layer distant from the supporting substrate;
the lithium niobate thin film being located directly below the waveguide.

2. The preparation method for an electro-optic modulator according to claim 1, **characterized in that** the step of providing a substrate; and forming a waveguide and a bottom electrode on an upper surface of the substrate comprises:
providing an SOI substrate, the SOI substrate comprising a backing substrate, an buried oxide layer, and a top silicon layer stacked in a bottom-to-top order;
etching the top silicon layer of the SOI substrate to obtain the waveguide and an initial bottom electrode; the remaining buried oxide layer and the backing substrate together serving as the substrate; and
doping the initial bottom electrode to obtain the bottom electrode; the bottom electrode being a heavily doped silicon electrode.

3. The preparation method for an electro-optic modulator according to claim 2, **characterized in that** the step of providing a lithium niobate thin film and bonding the lithium niobate thin film to a surface of the covering dielectric layer distant from the supporting substrate comprises:
providing a bonding substrate, the bonding substrate having a first dielectric layer formed on it;
forming a lithium niobate thin film on an upper surface of the first dielectric layer; and
bonding the lithium niobate thin film to a surface of the covering dielectric layer distant from the supporting substrate via a bonding layer.

4. The preparation method for an electro-optic modulator according to claim 3, **characterized in that** the bonding layer comprises a BCB layer.

5. The preparation method for an electro-optic modulator according to any one of claims 1 through 4, **characterized in that** it further comprises the following before the step of providing a lithium niobate thin film and bonding the lithium niobate thin film to a surface of the covering dielectric layer distant from the supporting substrate:
forming a second dielectric layer and a conductive lead-out structure, the second dielectric layer being located on a surface of the covering dielectric layer distant from the supporting substrate, and the conductive lead-out structure being connected to the metal electrode to electrically lead the metal electrode out; the second dielectric layer having in it a first opening, the first opening exposing the waveguide, a portion of the bottom electrode, and a portion of the covering dielectric layer;
the lithium niobate thin film being bonded to a surface of the covering dielectric layer exposed by the first opening distant from the supporting substrate.

6. The preparation method for an electro-optic modulator according to claim 5, **characterized in that** the step of forming a second dielectric layer and a conductive lead-out structure comprises:
forming a second dielectric layer on a surface of the covering dielectric layer distant from the supporting substrate, forming an interconnect hole in the second dielectric layer and the covering dielectric layer, the interconnect hole exposing the metal electrode;
forming a first interconnect plug in the interconnect hole, the first interconnect plug having one end connected to the metal electrode; and
forming a backside electrode on a surface of the second dielectric layer distant from the covering dielectric layer, the backside electrode being connected to the first interconnect plug; the backside electrode and the first interconnect plug together constituting the conductive lead-out structure.

7. The preparation method for an electro-optic modulator according to claim 5, **characterized in that** the step of forming a second dielectric layer and a conductive lead-out structure comprises:
forming a second dielectric layer on a surface of the covering dielectric layer distant from the supporting substrate, forming a first interconnect plug in the second dielectric layer and the covering dielectric layer, and forming a backside electrode in the second dielectric layer; the first interconnect plug having one end connected to the metal electrode and another end connected to the backside electrode; the backside electrode and the first interconnect plug together constituting the conductive lead-out structure; and
forming the first opening and a second opening in the second dielectric layer, the second opening exposing the backside electrode.

8. The preparation method for an electro-optic modulator according to claim 7, **characterized in that** the backside electrode comprises a number of backside electrode metal layers and a number of second interconnect plugs, the backside electrode metal layers that are adjacent are connected by the second interconnect plugs; the second opening exposes the backside electrode metal layer located at the bottom; any of the backside electrode metal layers in the backside electrode is connected to the metal electrode by the first interconnect plug.

9. An electro-optic modulator, **characterized in that** it comprises:
a lithium niobate thin film;
a covering dielectric layer located on the lithium niobate thin film;
a waveguide located in the covering dielectric layer and directly above the lithium niobate thin film;
a bottom electrode located in the covering dielectric layer and on two opposite sides of the waveguide and having a spacing from the waveguide; and
a metal electrode located in the covering dielectric layer and on the bottom electrode and connected to the bottom electrode.

10. The electro-optic modulator according to claim 9, **characterized in that** it further comprises:
a supporting substrate located on a surface of the covering dielectric layer distant from the lithium niobate thin film;
a first dielectric layer located on a surface of the lithium niobate thin film distant from the covering dielectric layer; and
a bonding substrate located on a surface of the first dielectric layer distant from the lithium niobate thin film.

11. The electro-optic modulator according to claim 10, **characterized in that** it further comprises:
a second dielectric layer located on a surface of the covering dielectric layer distant from the supporting substrate; the second dielectric layer having formed in it a first opening, the first opening exposing the waveguide, a portion of the bottom electrode, and a portion of the covering dielectric layer; the lithium niobate thin film being located in the first opening.

12. The electro-optic modulator according to claim 11, **characterized in that** the lithium niobate thin film and the covering dielectric layer are combined together by way of bonding.

13. The electro-optic modulator according to claim 11, **characterized in that** a bonding layer that bonds together the lithium niobate thin film and the covering dielectric layer is disposed between the lithium niobate thin film and the covering dielectric layer.

14. The electro-optic modulator according to claim 11, **characterized in that** a backside electrode is disposed on a surface of the second dielectric layer distant from the covering dielectric layer, the backside electrode being electrically connected to the metal electrode.

15. The electro-optic modulator according to any one of claims 9 through 14, **characterized in that** there are a plurality of the bottom electrodes, a plurality of the metal electrodes, and a plurality of the waveguides, the waveguides being located between the metal electrodes that are adjacent; orthographic projections of all of the waveguides onto a plane in which the lithium niobate thin film is located are on a surface of the lithium niobate thin film.
